# EUROPÄISCHE PATENTSCHRIFT

(11) **EP 1 465 810 B1**
(45) Veröffentlichungstag und Bekanntmachung des Hinweises auf die Patenterteilung: **24.05.2006**
(21) Anmeldenummer: 03729476.6
(22) Anmeldetag: 16.01.2003
(51) Int. Cl.: B65D 5/52, G11B 33/04

(54) **VERPACKUNGS- UND PRÄSENTATIONSVORRICHTUNG**
PACKING AND PRESENTATION DEVICE
DISPOSITIF D'EMBALLAGE ET DE PRESENTATION

(30) Priorität: 16.01.2002 DE 10201451
(43) Veröffentlichungstag der Anmeldung: 13.10.2004
(73) Patentinhaber: Bleicher-Kaikkis, Susanne, 80637 München (DE)
(72) Erfinder: Bleicher-Kaikkis, Susanne, 80637 München (DE)
(74) Vertreter: Diehl, Hermann O. Th.
(86) Internationale Anmeldenummer: PCT/EP2003/000414
(87) Internationale Veröffentlichungsnummer: WO 2003/059761

(56) Entgegenhaltungen:
- DE-A- 19 510 090
- DE-A- 19 647 729
- DE-A- 19 709 539
- DE-A- 19 728 263
- DE-A- 19 841 672
- US-A- 5 901 843

## Beschreibung

### Technisches Gebiet

Die Erfindung betrifft eine Verpackungs- und Präsentationsvorrichtung zur Verpackung und Halterung von einem oder mehreren flächigen Gegenständen, insbesondere von Compact-Disks.

### Stand der Technik

Für höherwertige flächige Erzeugnisse oder anderweitige flächige Erzeugnisse, deren Oberflächen nicht beschädigt werden dürfen, sind insbesondere zum Versand und zur Lagerung Verpackungen erforderlich, die diese Erzeugnisse gegen Einflüsse von außen schützen. So sind beispielsweise seit geraumer Zeit Compact-Disks (die auch abgekürzt als CD bezeichnet werden) als elektronische Speichermedien zur Speicherung vielfältigster Daten auf dem Markt. Die bekanntesten Verwendungsgebiete solcher Compact-Disks sind hierbei die Verwendung als Musik-CD zur Speicherung von Musikdaten aber auch insbesondere die Verwendung zur Speicherung von Programmen und Daten zur Verarbeitung in Computern. Durch diese vielfältigen Einsatzmöglichkeiten wurde die Compact-Disk in jüngster Vergangenheit zu einem Massenartikel, der in extrem hohen Stückzahlen auf dem Markt anzutreffen ist. Verbunden mit den hohen Stückzahlen stellt sich zwangsläufig die Frage nach der Lagerung solcher Compact-Disks einerseits als auch andererseits die Frage des sicheren und beschädigungsfreien Transports, beispielsweise beim Verschicken oder auch beim sonstigen Transport einer Compact-Disk. Bei der Lösungsfindung dieser Fragen stehen aufgrund der sehr hohen Stückzahlen die Kosten für die Herstellung einer sachgerechten Verpackung im Vordergrund. Auf dem Musik-Markt werden hierzu üblicherweise kassettenartige Hüllen verwendet, die zumeist aus einem Kunststoff hergestellt sind und die in ihrem Innern eine Aussparung aufweisen, in die die Compact-Disk eingelegt werden kann. Eine derartige kassettenartige Hülle ist beispielsweise in GB-A-2 154 550 oder auch in der DE-C-37 36 239 beschrieben. Solche kassettenartigen Hüllen sind jedoch in ihrer Herstellung einerseits verhältnismäßig teuer und lassen sich andererseits auch nur mit großem Aufwand wiederverwerten beziehungsweise recyclen. Auch erfordern solche kassettenartigen Hüllen ein verhältnismäßig großes Bauvolumen, wodurch die Lagerung einer Vielzahl von in solchen Hüllen verpackten Compact-Disks sehr platzaufwändig ist. Für viele Einsatzgebiete kommen solche kassettenartigen Hüllen somit sinnvollerweise nicht in Betracht. So versenden beispielsweise viele Firmen Compact-Disks als Werbematerial, wobei auf den Compact-Disks neue Demonstrations-Programme oder dergleichen gespeichert sind. Hier steht neben dem Kostenaspekt und dem Aspekt des Bauvolumens der Verpackung insbesondere auch die Handlichkeit der Verpackung, eine einfache Bedienweise beim Öffnen und Verschließen der Verpackung sowie beim Entnehmen und Wiedereinlegen der Compact-Disk aus und in die Verpackung, sowie auch die Möglichkeit, die Verpackung in einfacher Weise mit Werbematerial oder Informationsmaterial zu bedrucken oder zu bekleben, im Vordergrund.

Die Anmelderin hat hierzu in der offengelegten Patentanmeldeschrift DE-A-195 10 090 vorgeschlagen, eine Datenträgerverpackung vorzugsweise aus Papier oder Pappe herzustellen, wobei die Datenträgerverpackung eine längs einer Faltnaht zusammenklappbare Umhüllung aufweist. Die Umhüllung ist somit ähnlich einem Bucheinband mit einem vorderen Deckel und einem hinteren Deckel ausgeführt, wobei die Compact-Disk mittig zwischen die Deckel eingelegt wird. Um die Compact-Disk in dieser Position zu fixieren und um so ein versehentliches Herausfallen der Compact-Disk beim Öffnen und Schließen der Umhüllung zu verhindern, ist hier zusätzlich ein Fixierelement vorgesehen, welches sich in Richtung der Faltnaht erstreckt. Das Fixierelement weist einen Zwischenraum auf, in den die Compact-Disk mit einer Ausrichtung parallel zur Faltnaht eingeführt werden kann. Die Compact-Disk wird mittels des Fixierelements ähnlich einer Klemmvorrichtung durch Klemmen eines Teilkreisausschnittes der Compact-Disk fixiert. Als eine alternative Klemmvorrichtung wird hier auch vorgeschlagen, die Compact-Disk mittels zweier in der Faltnaht angeordneter, an gegenüberliegenden Seiten der Compact-Disk angreifender Schwalbenschwanz-klemmvorrichtungen zu fixieren. Das Fixierelement ist hier zusätzlich so ausgeführt, daß sich die in dem Fixierelement geklemmte Compact-Disk beim Öffnen der Umhüllung durch Auseinanderklappen der beiden Deckel aus der liegenden Position in die Senkrechte aufrichtet.
In ähnlicher Weise ist auch die in der offengelegten Patentanmeldeschrift DE-A-197 09 539 der Anmelderin beschriebene Verpackung für flächige Datenträger ausgeführt. Auch hier wird die eingelegte Compact-Disk durch Klemmung eines Teilkreisausschnittes der Compact-Disk in Längsrichtung der Faltnaht fixiert.

Eine im Aufbau hierzu ähnliche Verpackungs- und Präsentationsvorrichtung ist in der deutschen Offenlegungsschrift 197 28 263 beschrieben. Diese Verpackungs- und Präsentationsvorrichtung zur Verpackung und Halterung von einem oder mehreren flächigen Gegenständen, insbesondere von einer oder mehreren Compact-Disks oder dergleichen, enthält ein Verpackungselement und ein Halterungselement zur Halterung des flächigen Gegenstandes, wobei das Verpackungselement zumindest ein erstes Deckelement und ein zweites Deckelement umfaßt, die im verpackten Zustand näherungsweise parallel zueinander angeordnet sind und den flächigen Gegenstand in dem verpackten Zustand im wesentlichen vollständig umschließen, und die Deckelemente des weiteren längs eines Verbindungselements gelenkig so miteinander verbunden sind, daß das verpackungselement durch ein Aufklappen eines oder beider Deckelemente aus dem verpackten Zustand in einen unverpackten Zustand überführbar ist als auch umgekehrt, und wobei das Halterungselement den flächigen Gegenstand im verpackten und unverpackten Zustand näherungsweise parallel zur Längsrichtung des Verbindungselements haltert.

Bei dieser Anordnung besteht die Gefahr, daß sich die Anordnung nach dem Aufklappen durch einen Nutzer wieder von selbst zu einem gewissen Grad schließt. Hierdurch ist eine nur geringe Standfestigkeit der aufgeklappten Verpackung gegeben, wodurch die Handhabung der Verpackung erschwert wird. Andererseits führt dies auch zu einer geringeren positiven Präsentationswirkung des in der Verpackung gehalterten Gegenstandes.

### Darstellung der Erfindung

Der Erfindung liegt somit die Aufgabe zugrunde, eine Verpackungs- und Präsentationsvorrichtung zur Verpackung und Halterung von flächigen Gegenständen, insbesondere von Compact-Disks, zur Verfügung zu stellen, welche die vorstehend bekannten Probleme vermeidet. Insbesondere soll die Verpackungs- und Präsentationsvorrichtung ein möglichst geringes Volumen aufweisen und in der Handhabung durch einen Nutzer komfortabel gestaltet sein.

Diese Aufgabe wird erfindungsgemäß durch die Verpackungs- und Präsentationsvorrichtung gemäß Anspruch 1 gelöst. Weitere vorteilhafte Ausgestaltungen der Erfindung finden sich in den Unteranspruchen .

Die erfindungsgemäße Verpackungs- und Präsentationsvorrichtung zur Verpackung und Halterung von einem oder mehreren flächigen Gegenständen, insbesondere von Compact-Disks oder dergleichen, umfaßt ein Verpackungselement und ein Halterungselement zur Halterung des flächigen Gegenstandes. Das Verpackungselement ist hierbei mit zumindest einem ersten Deckelement und einem zweiten Deckelement ausgeführt, die im verpackten Zustand näherungsweise parallel zueinander angeordnet sind und den flächigen Gegenstand in einem verpackten Zustand im wesentlichen vollständig umschließen. Die Deckelemente sind des weiteren längs eines Verbindungselements gelenkig so miteinander verbunden, daß das Verpackungselement durch ein Aufklappen eines oder beider Deckelemente aus dem verpackten Zustand in einen unverpackten Zustand überführbar ist als auch umgekehrt. Das Verpackungselement ist somit im wesentlichen ähnlich einem Buchumschlag ausgeführt. Das Verbindungselement kann hierbei je nach Bedarf mit einer nur geringen Breite ausgeführt sein oder aber auch - insbesondere sofern mehrere flächige Gegenstände gehaltert werden sollen oder der gehalterte Gegenstand eine größere Dicke aufweist - mit einer größeren Breite. Im ersten Falle handelt es sich bei dem Verbindungselement somit eher um eine Verbindungslinie, während im zweiten Falle das Verbindungselement eher ein Verbindungsstreifen ähnlich einem Buchrücken darstellt.

Erfindungsgemäß wird der flächige Gegenstand im verpackten Zustand, d.h. bei zusammengeklappten Deckelementen, durch das Halterungselement mit einer zur Längsrichtung des Verbindungselements näherungsweise parallelen Ausrichtung gehaltert. Demgemäß ist der flächige Gegenstand im verpackten Zustand parallel oder näherungsweise parallel zu den Deckelementen und zwischen diesen angeordnet. Im unverpackten Zustand, d.h. bei auseinandergeklappten Deckelementen, ist der in dem Halterungselement gehalterte flächige Gegenstand unter einem Winkel zur Längsrichtung des Verbindungselements gedreht ausgerichtet.

Der in dem Halterungselement gehalterte Gegenstand wird somit während des Öffnens der Verpackungs- und Präsentationsvorrichtung aus seiner ursprünglichen Lage, in der der Gegenstand parallel zur Längsrichtung des Verbindungselements ausgerichtet ist, um einen Neigungswinkel gedreht, wobei der Neigungswinkel des flächigen Gegenstandes zur Längsrichtung des Verbindungselements im unverpackten Zustand bevorzugt zwischen 25° und 50°, besonders bevorzugt 40°, beträgt. Beim Schließen der Verpackungs- und Präsentationsvorrichtung erfolgt die Drehung in umgekehrter Weise.
Vorteilhaft erfolgt der Übergang der Ausrichtung des flächigen Gegenstandes durch Drehung des flächigen Gegenstandes während des Aufklappens des Verpackungselementes aus dem verpackten Zustand in den unverpackten Zustand stufenlos.
Die erfindungsgemäß ausgeführte Verpackungs- und Präsentationsvorrichtung kann somit mit einem kleineren Grundriß der Deckelemente und somit mit einem kleineren Bauvolumen der Verpackungs- und Präsentationsvorrichtung im verpackten Zustand realisiert werden als die aus dem Stand der Technik bekannten Ausführungsformen. Vorteilhaft ist hierzu das Halterungselement des weiteren so ausgeführt, daß der flächige Gegenstand zentral gehaltert wird. Die Halterungsvorrichtung braucht insofern keine Überhänge über den zu halternden Gegenstand in Längsrichtung des Verbindungselements mehr aufzuweisen, um eine sichere Halterung des flächigen Gegenstandes im verpackten sowie im unverpackten Zustand zu gewährleisten. Ferner sorgt der um einen Winkel gedrehte flächige Gegenstand im aufgeklappten Zustand für eine höhere Eigenstabilität der Verpackungs- und Präsentationsvorrichtung. Vorteilhaft sind die Deckelemente des Verpackungselements hierzu bis zu einem Winkel von 180° gegeneinander aufklappbar, so daß die Deckelemente im aufgeklappten Zustand eine eben Fläche bilden.
Insbesondere wird durch die erfindungsgemäße Ausführung der Verpackungs- und Präsentationsvorrichtung auch ein eigenständiges, versehentliches Wiederzuklappen der Verpackungs- und Präsentationsvorrichtung verhindert.

Des weiteren wird durch die Drehung der Präsentationseffekt des flächigen Gegenstandes beim Öffnen der Verpackungs- und Präsentationsvorrichtung sowie im aufgeklappten Zustand der Verpackungs- und Präsentationsvorrichtung verstärkt.

In einer bevorzugten Ausführungsform ist das Halterungselement der Verpackungs- und Präsentationsvorrichtung ein sich in einem Kopfbereich verjüngendes Element und besonders bevorzugt ein Dreieckselement mit einem im Kopfbereich des sich verjüngenden Elements oder Dreieckselements angeordneten Aufnahmeelement zur Aufnahme des flächigen Gegenstandes. Vorteilhaft wird der Kopfwinkel des Dreieckselements während des Aufklappens des Verpackungselements vergrößert. Im verpackten Zustand ist der Kopfwinkel somit sehr spitz, bevorzugt in einem Bereich zwischen 0° und 5° Kopfwinkel, und weitet sich beim Aufklappen des Verpackungselements auf, bevorzugt bis zu einem Winkel von 30° bis 60°.
Das Aufnahmeelement zur Aufnahme des flächigen Gegenstandes ist bevorzugt eine Schrägschlitzung, die in dem Dreieckselement vorgesehen ist und die sich auf beiden Seiten des Dreieckselements von dem Kopfbereich in Richtung des Bodenbereichs des Dreieckselements erstreckt. Eine solche Schrägschlitzung, die in einfacher Weise herzustellen ist, ermöglicht auch eine einfache und komfortable Handhabung, wobei der flächige Gegenstand in einfacher Weise in die Schrägschlitzung eingesteckt wird. Andererseits ist es in einfacher Weise möglich, die Schrägschlitzung mit einer dem jeweiligen Anwendungsfall angepaßten Tiefe auszuführen, um so einen sicheren Halt des in die Schrägschlitzung eingeführten flächigen Gegenstandes zu gewährleisten. Die Schrägschlitzung ist vorteilhaft auf jeder Dreiecksseite mit gleicher Tiefe ausgeführt, so daß der flächige Gegenstand auf beiden Seiten des Dreieckselements gleich tief in das Dreieckselement eindringt.
Vergrößert sich der Kopfwinkel des Dreieckselements nun beim Aufklappen der Verpackungs- und Präsentationsvorrichtung, so verändert sich die Winkelposition der Schrägschlitzung in Form einer Drehung um die Spitze des Dreieckselements. Entsprechend dieser Winkeländerung der Schrägschlitzung erfährt auch ein in die Schrägschlitzung eingeführter flächiger Gegenstand eine Drehung.

Vorteilhaft umfaßt das Dreieckselement einen ersten und einen zweiten Schenkel, die jeweils eine Oberkante und eine Unterkante aufweisen, wobei die Schenkel an ihren Oberkanten gelenkig miteinander verbunden sind und hier den Kopfbereich des Dreieckselements bilden. Die Unterkante des ersten Schenkels ist ferner mit einer Innenseite des einen Deckelementes des Verpackungselementes und die Unterkante des zweiten Schenkels mit einer Innenseite des anderen Deckelementes des Verpackungselementes verbunden. Besonders vorteilhaft ist das Dreieckselement innen hohl ausgeführt. Es wäre jedoch auch denkbar, das Dreieckselement innen mit einem hochelastischen Material, beispielsweise einem Schaumstoff oder Watte, auszufüllen.

Das Dreieckselement ist zweckmäßig so angeordnet, daß im zusammengeklappten Zustand des Verpackungselements eine Mittelebene, die von der Mittellinie des Verbindungselements und der Spitze des Dreieckselements aufgespannt wird, parallel zu den Deckelementen und zwischen diesen verläuft.
Vorzugsweise ist das Dreieckselement ferner symmetrisch zur Mittelebene ausgeführt. Die Schenkel des Dreieckselements sind dementsprechend vorteilhaft gleich lang. Bei einem Aufklappen der Deckelemente des Verpackungselements faltet sich somit das Dreieckselement auf beiden Schenkelseiten gleichermaßen auf. Wird das Verpackungselement durch ein Umklappen beziehungsweise durch ein Zusammenklappen der Deckelemente geschlossen, so faltet sich das Dreieckselement in umgekehrter Weise auch wieder gleichmäßig zusammen.

In einer besonders vorteilhaften Ausführungsform der Erfindung ist das Verpackungselement und/oder das Halterungselement jeweils aus einem einteiligen Grundzuschnitt hergestellt. Besonders zweckmäßig ist als Werkstoff für das Verpackungselement und/oder das Halterungselement ein papierner Werkstoff gewählt. In Frage kommt hier insbesondere ein flächiger vorzugsweise bedruckbarer und/oder folienartig ausgebildeter Kunststoff oder ein dickeres Papier oder Pappe, wobei in allen Fällen ausreichende Stabilität sowie hinreichender Schutz des verpackten Gegenstandes gewährleistet ist. Ein papierner Werkstoff bietet ökologisch den Vorteil, daß dieser Werkstoff einfach und umweltgerecht entsorgt werden kann oder auch gut einer Wiederverwertbarkeit zugeführt werden kann. Auch kann die aus Papier oder Pappe oder bedruckbarem Kunststoff hergestellte Verpackungsvorrichtung leicht direkt bedruckt werden. Sie erlaubt auch eine Beschriftung oder Beklebung. Vorteilhaft geschieht dies noch im planen Zustand des einteiligen Grundzuschnittes.

Vorteilhaft umfaßt die Verpackungs- und Präsentationsvorrichtung neben den bereits erwähnten Elementen ferner zusätzlich ein Hüllelement, in das das Verpackungselement in verpacktem Zustand eingeschoben werden kann. Hierzu weist das Hüllelement eine Oberseite und eine zur Oberseite parallele und entsprechend der Dicke des Verpackungselements beabstandete Unterseite auf. Ferner ist das Hüllelement an zumindest zwei Längsseiten mittels Seitenelementen verschlossen. Das Hüllelement bietet zusätzlichen Schutz und sichert das Verpackungselement gegen ein versehentliches Aufklappen eines Deckelementes beispielsweise beim Transport. Auch kann das Hüllelement als Außenverpackung verwendet werden, auf dem beispielsweise eine Adresse eines Empfängers sowie eine postalische Frankierung angebracht werden kann. Vorteilhaft ist auch das Hüllelement aus einem papiernen Werkstoff oder bevorzugt bedruckbarem Kunststoff (z.B. Folie) hergestellt. Das Hüllenelement kann ebenfalls direkt bedruckt, beschriftet oder beklebt werden.

Neben der oben erwähnten Verwendung der erfindungsgemäßen Verpackungs- und Präsentationsvorrichtung zur Verpackung und Präsentation von gehalterten Compact Disks, kann die erfindungsgemäße Vorrichtung auch zur Verpackung und Präsentation anderer, insbesondere flächiger Gegenstände verwendet werden.

Zweckmäßigerweise sind die einzelnen Bauteile aus einem bogenförmigen Zuschnitt eines papiernen Werkstoffs oder Kunststoff-Werkstoffs gefaltet, wobei die Bauteile zweckmäßigerweise miteinander durch Verklebungen verbunden sind. Unter einer Verklebung wird jegliche Vorgehensweise verstanden, mit der zwei einander gegenüberliegende Flächenelemente fest miteinander verbunden werden. Dies kann durch Klebstoff erfolgen, aber auch durch Prägungen. Falls Kunststoffprodukte zum Einsatz kommen, die thermoplastisch sind oder zumindest in ihrer Oberschicht thermoplastische Eigenschaften aufweisen (z.B. durch Kaschierung oder Einbringung von thermoplastischen Fasern), ist auch eine Verklebung durch thermische Einwirkung möglich.

Verklebungen können auch ganz oder teilweise durch Steckverbindungen ersetzt werden.

Die Erfindung betrifft ferner Zuschnitte für eine solche Verpackung. Ein Zuschnitt ist ein Bogen Blattmaterial, aus dem die Vorrichtung durch Falten und Verkleben herstellbar ist.

### Kurze Beschreibung der Zeichnungen

Die Erfindung wird nachfolgend anhand von Ausführungsbeispielen im Zusammenhang mit den Zeichnungen näher erläutert.

Es zeigen:
- Fig. 1: eine erste Ausführungsform der erfindungsgemäßen Verpackungs- und Präsentationsvorrichtung in dreidimensionaler Darstellung,
- Fig. 2: eine Draufsicht auf die in Figur 1 dargestellte, erste Ausführungsform der Erfindung;
- Fig. 3: eine Seitenansicht auf die in Figur 1 dargestellte, erste Ausführungsform der Erfindung, wobei in der erfindungsgemäßen Verpackungs- und Präsentationsvorrichtung eine Compact-Disk gehaltert ist;
- Fig. 4: ein Hüllelement zur Verwendung mit der in Figur 1 dargestellten ersten Ausführungsform der Erfindung in dreidimensionaler Ansicht;
- Fig. 5A-C: Grundzuschnitte der in Figur 1 dargestellten, ersten Ausführungsform der Erfindung;
- Fig. 6: eine zweite Ausführungsform der erfindungsgemäßen Verpackungs- und Präsentationsvorrichtung in dreidimensionaler Darstellung,
- Fig. 7A-C: den Grundzuschnitte der in Figur 6 dargestellten, zweiten Ausführungsform der Erfindung sowie den Grundzuschnitt einer zur zweiten Ausführungsform abgewandelten dritten Ausführungsform.

In den Figuren sind nur die für das Verständnis der Erfindung wesentlichen Elemente und Bauteile gezeigt. Die dargestellten erfindungsgemäßen Vorrichtungen können somit in vielfältiger Weise ergänzt oder auch in für den Fachmann offensichtlicher Weise modifiziert werden, ohne daß hierdurch der Erfindungsgedanke verlassen oder abgeändert würde.

Gleiche oder gleichwirkende Bauteile sind in den Figuren weitgehend mit den gleichen Bezugszeichen gekennzeichnet.

### Wege zur Ausführung der Erfindung

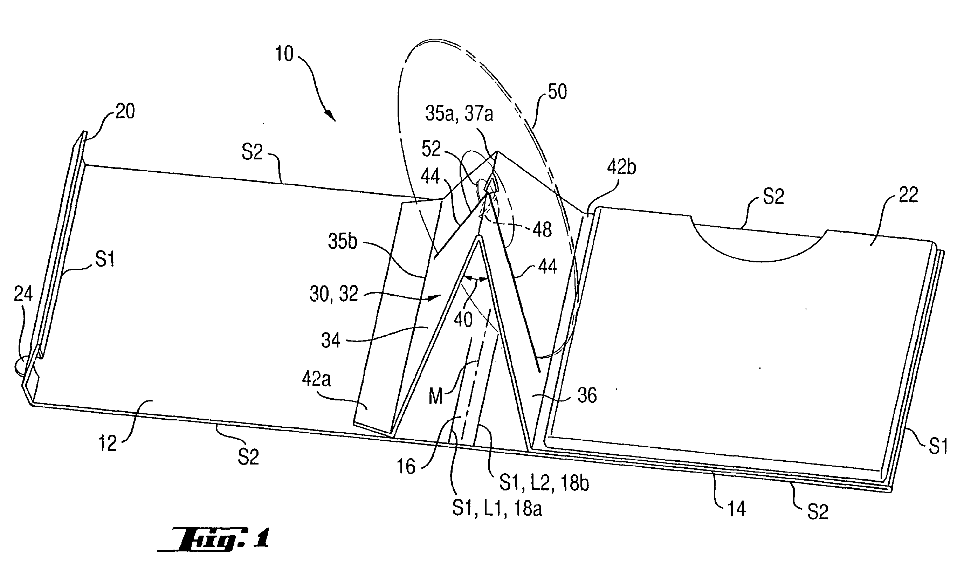

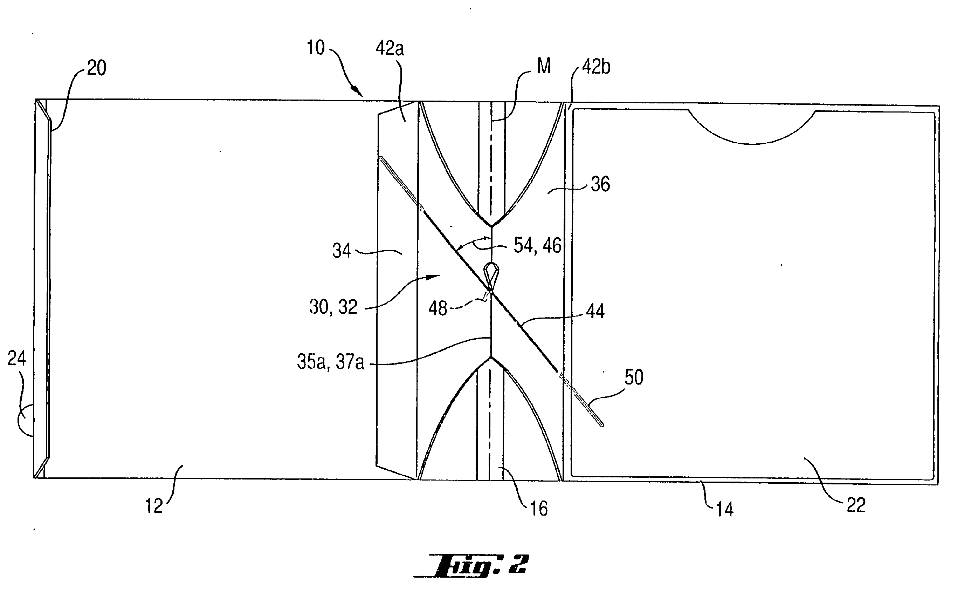

In Figur 1 ist eine erste Ausführungsform der erfindungsgemäßen Verpackungs- und Präsentationsvorrichtung in dreidimensionaler Ansicht dargestellt. Figur 2 zeigt eine Draufsicht auf die erste Ausführungsform der Erfindung.
Die hier dargestellte erste Ausführungsform der erfindungsgemäßen Verpackungs- und Präsentationsvorrichtung dient zur Verpackung und Präsentation einer Compact-Disk. Demgemäß sind die Abmessungen der hier dargestellten Verpackungs- und Präsentationsvorrichtung auch den Abmessungen einer Compact-Disk angepaßt gewählt. Die Halterung eines anderen Gegenstandes würde entsprechend andere Abmessungen der Verpackungs- und Präsentationsvorrichtung bedingen.
Die in Figur 1 dargestellte Ausführungsform der erfindungsgemäßen Verpackungs- und Präsentationsvorrichtung umfaßt ein Verpackungselement 10, das als wesentliche Bestandteile ähnlich einem Bucheinband ein erstes Deckelement 12 und ein zweites Deckelement 14 sowie ein Verbindungselement 16 aufweist. Die beiden Deckelemente 12, 14, die in Form eines Buchdeckels ausgeführt sind, weisen hier jeweils gleiche, rechteckige Grundrisse auf. Die kleineren Seitenkanten S1 des Grundrisses sind hierbei jeweils nur geringfügig größer ausgeführt als der Durchmesser einer Compact-Disk. Die anderen Seitenkanten S2 sind mit einer etwas größeren Seitenkantenlänge ausgeführt als die kleineren Seitenkanten S1, um hier neben der Bedeckung der Compact-Disk eine Anordnung des im folgenden näher beschriebenen Halterungselements 30 zu ermöglichen. Das erste und das zweite Deckelement 12, 14 sind mittels des Verbindungselements 16 gelenkig miteinander verbunden und zwar in der Form, daß jedes Deckelement 12, 14 längs einer der kleineren Seitenkanten S1 mit einer Längsseite L1, L2 des Verbindungselements 16 verbunden ist. Die Deckelemente 12, 14 sind jeweils entlang dieser Verbindungslinien 18a, 18b klappbar, wobei jedes der Deckelemente 12, 14 aus der in Figur 1 dargestellten waagerechten Position in eine senkrechte Position umgeklappt werden kann. Im Rahmen der weiteren Beschreibung wird die Position, in der die Deckelemente 12, 14 in der waagerechten Position angeordnet sind, als aufgeklappte Anordnung bezeichnet, während die Position, in der die Deckelemente 12, 14 in die senkrechte Position umgeklappt sind, als zusammengeklappte Anordnung der Verpackungs- und Präsentationsvorrichtung bezeichnet wird.
Sind die Deckelemente 12, 14 in die senkrechte Position aufgestellt, so umhüllen die Deckelemente 12, 14 eine zwischen diese Deckelemente eingelegte Compact-Disk 50 im wesentlichen vollständig. Des weiteren weist das Verbindungselement 16 in der hier dargestellten Ausführungsform eine solchen Breite auf, daß, sobald die Deckelemente 12, 14 in die Senkrechte geklappt sind, zwischen diesen Deckelementen 12, 14 ein ausreichender Platz zur Aufnahme der im folgenden beschriebenen Halterungsvorrichtung 30 sowie der zu halternden Compact-Disk 50 zur Verfügung steht. Bei dem hier dargestellten Verbindungselement 16 handelt es sich somit um einen schmalen Verbindungsstreifen, der aber nach Bedarf auch dicker oder schmäler ausgeführt werden kann.

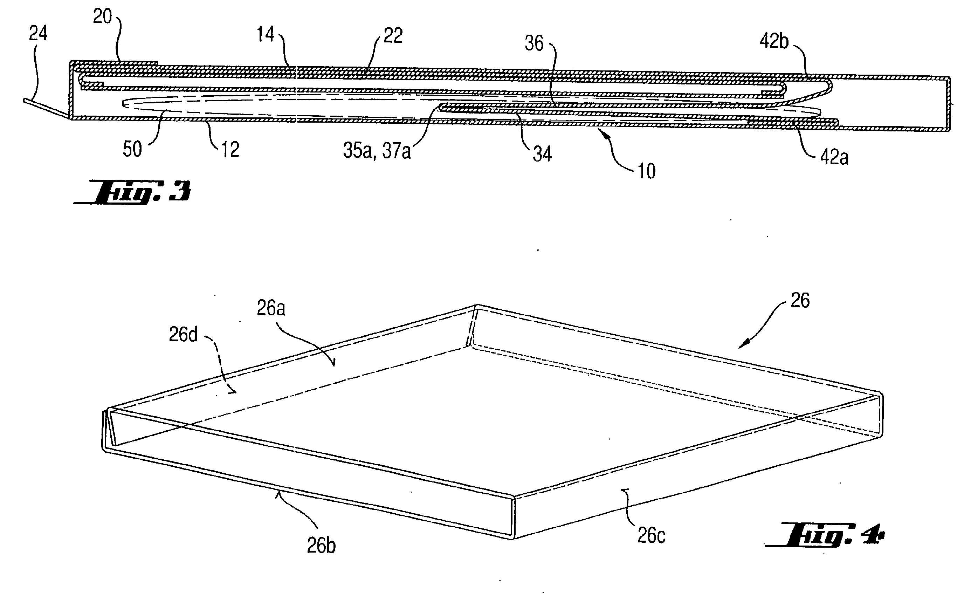

Ferner ist in der in Figur 1 dargestellten Ausführungsform der Erfindung an der der Verbindungslinie 18a gegenüberliegenden Seitenkante S1 des ersten Deckelements 12 ein Verschluß angeordnet. Der Verschluß ist hier als umschlagbare Lasche 20 ausgeführt und gelenkig mit dem ersten Deckelement 12 verbunden. Sind beide Deckelemente in die Senkrechte aufgeklappt, so wird die Lasche 20, wie in Figur 3 dargestellt, um das zweite Deckelement 14 geschlagen und führt so zu einer Fixierung der beiden Deckelemente 12, 14, so daß sich die Deckelemente 12, 14 nicht eigenständig wieder öffnen können. Alternativ könnte der Verschluß beispielsweise auch als magnetischer Verschluß ausgeführt sein, der kleine, auf die Deckelemente aufklebbare Metall- und Magnetplättchen umfaßt.

Aber auch andere, dem Fachmann bekannte Verschlüsse können hier zum Einsatz kommen.

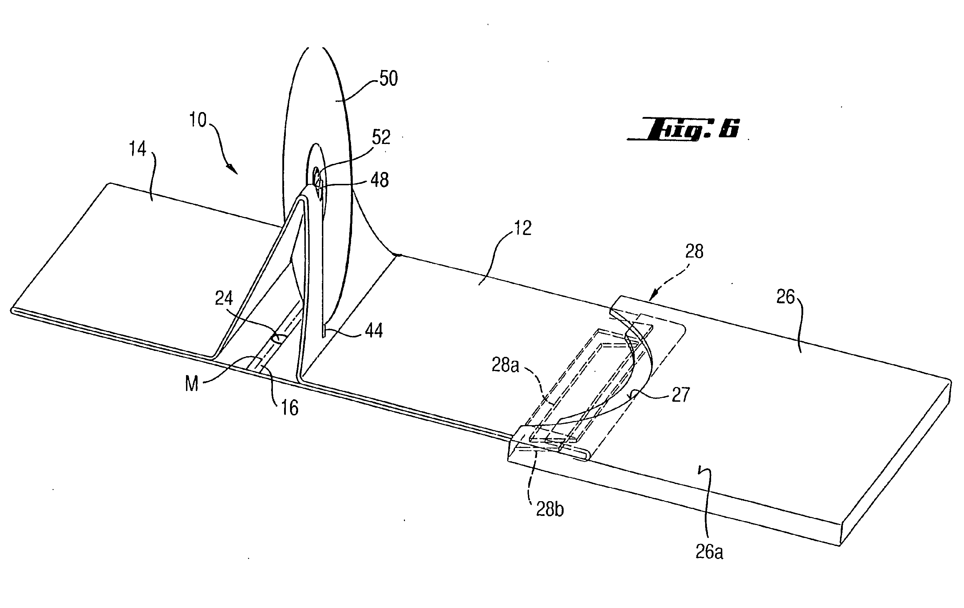

Neben dem Verpackungselement 10 weist die in Figur 1 dargestellte Verpackungs- und Präsentationsvorrichtung ferner ein Halterungselement 30 auf, welches nahe dem Verbindungsstreifen 16 des Verpackungselements 10 angeordnet ist. Das Halterungselement 30 dient dazu, eine Compact-Disk 50 sowohl in dem in Figur 1 dargestellten aufgeklappten Zustand der Verpackungs- und Präsentationsvorrichtung als auch in einem zusammengeklappten Zustand, d.h. bei in die Senkrechte aufgeklappten Deckelementen und wie in Figur 3 dargestellt, zu haltern.
Das Halterungselement 30 ist hier als Dreieckselement 32 mit einem ersten Schenkel 34 und einem zweiten Schenkel 36 ausgeführt, wobei die Schenkel 34, 36 im Kopfbereich des Dreieckselements 32 entlang der jeweiligen Oberkanten 35a, 37a der Schenkel gelenkig miteinander verbunden sind und hier einen Kopfwinkel 40 des Dreieckselements einschließen. Im Bodenbereich des Dreieckselements 32, d.h. im Bereich der den Oberkanten gegenüberliegenden Unterkanten 35b, 37b der Schenkel, sind die Schenkel 34, 36 des Dreieckselements 32 jeweils mittels flügelartigen Klappen 42a, 42b, die jeweils gelenkig mit dem betreffenden Schenkel verbunden sind, mit den Innenseiten der Deckelemente 12, 14 verbunden. In einer einfach herzustellenden Weise sind die Klappen 42a, 42b hierzu auf den Innenseiten der Deckelemente aufgeklebt. In der hier dargestellten Ausführungsform erstreckt sich, wie auch dem in Figur 5A dargestellten Grundzuschnitt zu entnehmen ist, eine Klappe 42b bis zur äußeren Seitenkante des zweiten Deckelements 14 und ist mit dieser durch eine Faltnaht verbunden. Somit lassen sich das Verpackungselement 10 als auch das Halterungselement 30 aus einem einteiligen Grundzuschnitt herstellen. Die andere Klappe 42a der in Figur 1 dargestellten Ausführungsform ist mit einer Breite von etwa 1 cm ausgeführt. Die Schenkel 34, 36 des Dreieckselements sind ferner mit einer etwas größeren Höhe ausgeführt als der halbe Durchmesser der zu halternden Compact-Disk 50. Die Anordnung des Dreieckselements ist hierbei so gewählt, daß die Unterkanten 35b, 37b der Schenkel zu den Verbindungslinien 18a, 18b des Verbindungselements 16 parallel verlaufen und so zu den Verbindungslinien 18am 18b beabstandet sind, daß sich in dem in Figur 1 dargestellten, aufgeklappten Zustand der Verpackungs- und Präsentationsvorrichtung der Kopfwinkel 40 des Dreieckselements zu etwa 35° ergibt. Die Anordnung kann aber zweckmäßig auch so gewählt werden, daß sich der Kopfwinkel des Dreieckselements im aufgeklappten Zustand in einem Bereich von etwa 20° bis etwa 50 ° beträgt. Des weiteren ist es vorteilhaft, das Dreieckselement 32, wie in Figur 1 dargestellt, in symmetrischer Anordnung zum Verbindungselement 16 anzuordnen. Das heißt, daß jeweils die Abstände der Unterkanten 35b, 37b der Schenkel 34, 36 des Dreieckselements zur Mittellinie M des Verbindungselements 16 gleich groß sind.
Das Halterungselement 30 weist des weiteren eine Schrägschlitzung 44 auf, die sich über beide Schenkel 34, 36 des Halterungselements 30 erstreckt. Die Schrägschlitzung 44 ist hier mittig in dem Dreieckselement 32 angeordnet und zwar so, daß sich der schräg angeordnete Schlitz durchgehend unter dem gleichen Schrägungswinkel von dem ersten Schenkel 34 auf den zweiten Schenkel 36 erstreckt. Der Schrägungswinkel 46 bezieht sich hierbei auf den planen Zustand der Schenkel und ist beispielsweise dem in Figur 5A dargestellten Grundzuschnitt der Halterungsvorrichtung entnehmbar. In Figur 5A beträgt der Schrägungswinkel 78°. Je nach Material des Halterungselements ist die Schrägschlitzung 44 entweder lediglich nur als Schnitt mit verschwindender Schlitzbreite oder auch als Nut mit einer dem zu halternden Gegenstand entsprechenden Breite ausgeführt. Im vorliegenden Fall ist das Halterungselement 30 wie auch das Verpackungselement 10 und auch die weiteren, im folgenden beschriebenen Elemente der Verpackungs- und Präsentationsvorrichtung aus einem papiernen Werkstoff, hier einem dünnen Pappewerkstoff, hergestellt, der eine hohe Flexibilität aufweist und faltbar sowie vorzugsweise direkt bedruckbar ist. Alternativ kann eine vorzugsweise bedruckbare Kunststofffolie als Material verwendet sein. Entsprechend ist es nicht erforderlich, die Schlitzung mit einer nennenswerten Schlitzbreite auszuführen, um die Compact Disk in die Schlitzung einführen zu können. Vielmehr genügt hier ein einfacher Schnitt, wobei sich der Schlitz beim Einführen der Compact Disk aufgrund der Flexibilität des dünnen Pappewerkstoffes aufweitet.

Die zu halternde Compact Disk 50 kann somit in der hier dargestellten Ausführungsform der Erfindung in die Schrägschlitzung 44 des Halterungselementes 30 eingesteckt werden und wird hier gehaltert. Die Schrägschlitzung 44 erstreckt sich von dem Kopfbereich des Dreieckselements in Richtung des Bodenbereichs des Dreieckelements, also in Richtung des Verbindungselements. Das Dreieckselement 32 ist hierbei so tief geschlitzt, daß die Compact-Disk 50 bis etwa zur Mitte der Compact-Disk in die Schlitzung eingeführt werden kann. Um die Compact-Disk 50 in dieser Position zu sichern, ist zusätzlich im Kopfbereich des Dreieckselements 32 ein Sicherungselement zur Sicherung der in den Schrägschlitz eingesteckten Compact Disk angeordnet. Das Sicherungselement ist in der hier dargestellten Ausführungsform der Erfindung als eine Sicherungsnase 48 ausgeführt, die zur Sicherung der Compact Disk durch die mittige Aussparung 52 der Compact Disk von einer Dreiecksseite zur anderen Dreiecksseite hindurchgreift. Die zur Sicherung genutzte Aussparung der Compact-Disk ist in handelsüblichen Compact-Disks standardmäßig vorgesehen. Vorzugsweise ist die Sicherungsnase 48 mit einem der beiden Schenkel fest verbunden und besonders bevorzugt, wie in dem in Figur 5A dargestellten Grundzuschnitt dargestellt, durch geeigneten Zuschnitt einteilig mit einem Schenkel ausgeführt.
In der in Figur 1 dargestellten, aufgeklappten Anordnung der Deckelemente 12, 14 weist die in die Schrägschlitzung 44 eingesteckte Compact-Disk 50 einen Winkel 54 von etwa 40° zur Längsrichtung des Verbindungselements, somit zur Mittellinie M, auf. Dieser Winkel 54 ist in der in Figur 2 dargestellten Draufsicht besonders gut zu erkennen und ist nicht mit dem Schrägungswinkel gleichzusetzen, da letzterer die Verhältnisse im planen Zustand der Schenkel wiedergibt. Werden nun die Deckelemente oder auch nur ein Deckelement in die Senkrechte umgeklappt, so beschreiben die Deckelemente oder das Deckelement hierbei einen Viertelkreisbogen, wobei das Verpackungselement teilweise oder ganz geschlossen wird. Entsprechend bewegen sich die Unterkanten der Schenkel ebenso jeweils entlang eines Viertelkreisbogens, wobei die Spitze des Dreieckselements lediglich eine transversale Bewegung erfährt. Hierdurch kommt es zu einer Verringerung des Kopfwinkels des Dreieckselements. Im Extremfall, d.h. bei geringer Materialdicke und kleiner Breite des Verbindungselements, kann der Kopfwinkel bis zu einem Wert von etwa 0° oder geringfügig mehr als 0° verringert werden. Infolge dieser Verringerung des Kopfwinkels verringert sich auch der Winkel, der von der in der Schrägschlitzung gehalterten Compact-Disk und der Längsrichtung des Verbindungselements eingeschlossen wird. Durch die Verringerung des senkrechten Abstandes zwischen den Schenkeln des Halterungselements und der Mittelebene, die durch die Längsmittelachse des Verbindungselements und der Spitze des Dreieckselements aufgespannt wird, verringert sich auch der Winkel zwischen der gehalterten Compact-Disk und der Längsrichtung des Verbindungselements. Die in der Schrägschlitzung 44 gehalterte Compact-Disk 50 wird somit infolge des Umklappens der Deckelemente 12, 14 in die Längsrichtung des Verbindungselements 16, somit in Richtung der Mittellinie M des Verbindungselementes 16, eingedreht. Im zusammengeklappten Zustand beider Deckelemente, wie dies in Figur 3 dargestellt ist, ist die Compact-Disk 50 somit annähernd parallel zur Längsrichtung des Verbindungselements 16 und somit auch parallel zu den Deckelementen 12, 14 ausgerichtet.

Beim Aufklappen oder Auseinanderklappen der Deckelemente aus der zusammengeklappten Anordnung in die in Figur 1 dargestellte Anordnung verläuft die Drehung der gehalterten Compact-Disk entsprechend in umgekehrter Weise.
Aufgrund dieses Halterungsprinzips der erfindungsgemäßen Verpackungs- und Präsentationsvorrichtung kann das Verpackungselement mit einem nur geringfügig größeren Grundriß ausgeführt sein als der Grundriß des zu halternden Gegenstandes. Im Vergleich zum Stand der Technik sind keine Überhänge der Halterungsvorrichtung über den zu halternden Gegenstand mehr erforderlich, um eine sichere Halterung des Gegenstandes zu gewährleisten. Die gesamte erfindungsgemäße Verpackungs- und Präsentationsvorrichtung kann somit im Vergleich zu den aus dem Stand der Technik bekannten Verpackungs- und Präsentationsvorrichtungen mit geringeren Grundrißabmessungen ausgeführt sein. Die erfindungsgemäße Ausführung einer Verpackungs- und Präsentationsvorrichtung erlaubt somit einerseits eine sehr platzsparende Verpackung eines flächigen Gegenstandes, beispielsweise der im Ausführungsbeispiel beschriebenen Compact-Disk. Eine solche platzsparende Verpackung bietet insbesondere Vorteile beim Versand oder auch bei der Lagerung vor allem einer Vielzahl solcher Verpackungen. Im Falle der Verwendung für Musik-CDs kann die Verpackungs- und Präsentationsvorrichtung somit auch in den standardisierten Abmessungen der üblicherweise verwendeten kassettenartigen Hüllen gefertigt werden und ermöglicht somit eine Lagerung in handelsüblichen CD-Ständern.

Die in Figur 1 dargestellte Verpackungs- und Präsentationsvorrichtung umfaßt ferner ein Einschubelement, das im vorliegenden Fall als Schuber 22 ausgeführt ist und ebenso aus einem dünnen Pappematerial gefertigt ist. Der Schuber 22 ist hierbei in sehr einfacher und kostengünstiger Fertigungsweise auf die Innenseite des zweiten Deckelements 14 aufgeklebt. Der Schuber 22 selbst besteht lediglich aus einem Vorderelement 22a und einem Rückelement 22b, die beide einen gleich großen, quadratischen Grundriß aufweisen und an drei Seitenkanten miteinander verbunden sind. Die vierten Seitenkanten des Vorder- und des Rückelements sind nicht miteinander verbunden, so daß eine Compact-Disk von hier in den Schuber 22 eingeführt werden kann.
Der Schuber eignet sich insbesondere dazu, daß die zu halternde Compact-Disk 50 beispielsweise beim Transport hierin sicher verstaut wird. Es können aber in dem Schuber auch eine weitere Compact-Disk oder auch ein oder mehrere Begleitzettel verstaut werden.

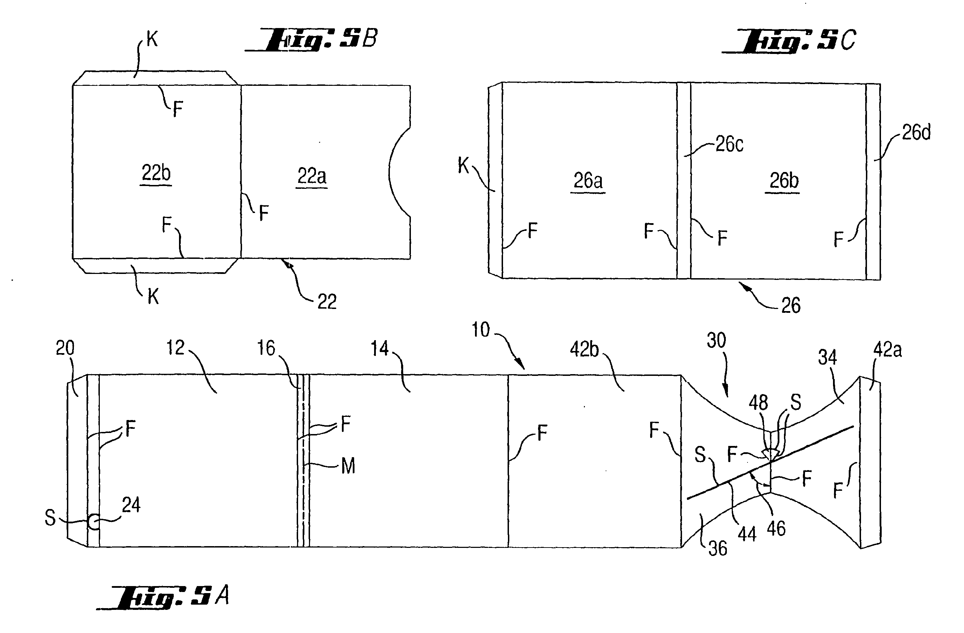

Des weiteren weist die in Figur 1 dargestellte Verpackungs- und Präsentationsvorrichtung im Bereich der Lasche 20 eine kleine Nase 24 auf. Diese Nase 24 steht hierbei nach außen ab und dient dazu, daß das Verpackungselement 10 in leicht zu handhabender Weise aus einem wie in Figur 4 dargestellten Hüllelement 26 herausgezogen werden kann.
Das in Figur 4 dargestellte Hüllelement 26 umfaßt eine Oberseite 26a und eine von der Oberseite beabstandete Unterseite 26b sowie zusätzlich zwei Seitenelemente 26c, 26d. Die Abmessungen der Ober- und Unterseite sowie der Seitenelemente als auch der Abstand der Oberseite von der Unterseite sind hierbei so gewählt, daß das in der Figur 1 dargestellte Verpackungselement 10 bei zusammengeklappten Deckelementen gemäß Figur 3 unter leichtem Druck in den von dem Hüllelement 26 umschlossenen Hohlraum eingeschoben werden kann. Das Verpackungselement 10 wird hierbei so in das Hüllelement 26 eingeschoben, daß die Lasche 20 sowie das Verbindungselement 16 in Richtung der offenen Seiten des Hüllelements 26 ausgerichtet zu liegen kommen. Die beiden Seitenelemente 26c, 26d des Hüllelements 26 verschließen demgemäß das eingeschobene Verpackungselement 10 an den noch offenen Seitenflächen des Verpackungselements und verhindern somit ein versehentliches Herausfallen einer in das Verpackungselement eingelegten Compact-Disk auch in diesen Richtungen.

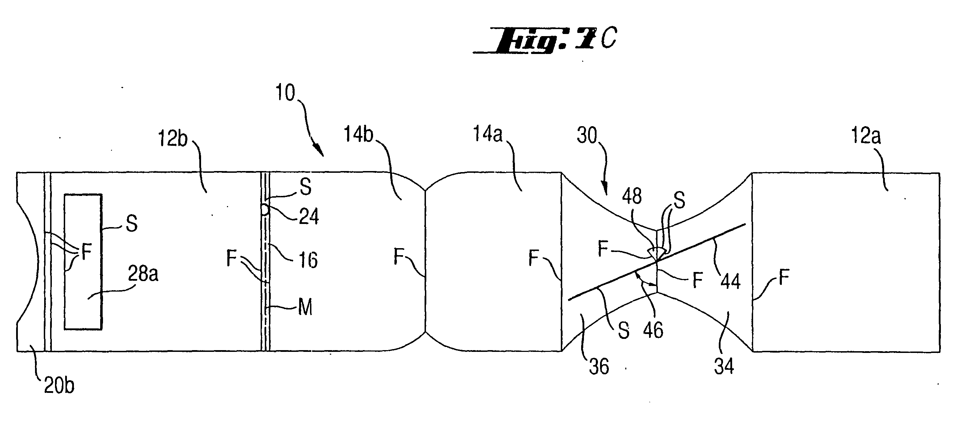

Figuren 5A-C zeigen des weiteren einen Grundzuschnitt (Figur 5A) der in Figur 1 dargestellten, ersten Ausführungsform der Erfindung inklusive dem Hüllelement 26 (Figur 5C) aus Figur 4. Der Grundzuschnitt für das Verpackungselement 10 ist vorteilhaft im wesentlichen einteilig ausgeführt, wobei der Schuber 22 (Figur 5A) und das Hüllelement 26 einen eigenen Grundzuschnitt aufweist. Ein solcher Grundzuschnitt ermöglicht insbesondere dann eine äußerst kostengünstige Herstellung der erfindungsgemäßen Verpackungs- und Präsentationsvorrichtung, wenn diese aus einem faltbaren Material, beispielsweise einem papiernen Werkstoff gefertigt wird. Die in dem Grundzuschnitt dargestellten Linien stellen hierbei entweder Schnittlinien (in Figur 5A-C und 7A-C mit S gekennzeichnet) oder Faltlinien (in Figur 5A-C und 7A-C mit F gekennzeichnet) dar. An Faltlinien ist lediglich ein Falten des Zuschnitts in die gewünschte Position erforderlich. Das Hüllelement 26 sowie der Schuber 22 weisen neben den bereits beschriebenen Elementen zusätzlich Klappen (in Figur 5A-C und 7A-C mit K gekennzeichnet) auf, die als Klebeflächen zur Verbindung mit anderen Flächen dienen.

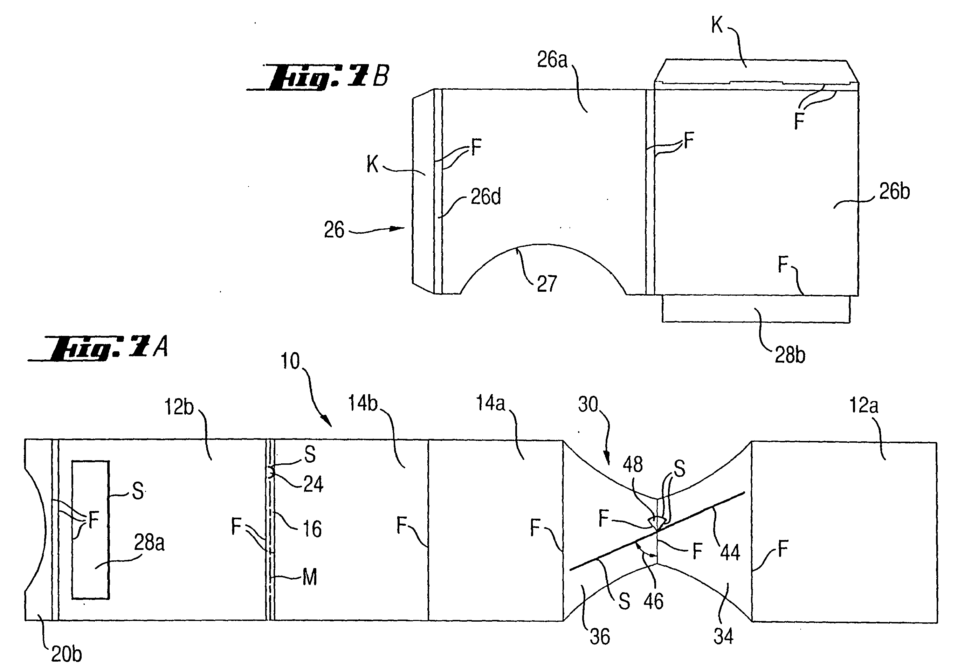

Figur 6 zeigt eine zweite Ausführungsform der erfindungsgemäßen Verpackungs- und Präsentationsvorrichtung in dreidimensionaler Darstellung. Die zweite Ausführungsform der erfindungsgemäßen Verpackungs- und Präsentationsvorrichtung ist wiederum aus einem papiernen Werkstoff, vorzugsweise einer dünneren Pappe, hergestellt. Anstelle dieses Materials kann auch eine vorzugsweise bedruckbare Kunststofffolie verwendet sein. Der zugehörige Grundzuschnitt ist in Figur 7A, B wiedergegeben. In Figur 7C wiedergegeben ist der Grundzuschnitt einer dritten Ausführungsform, die im Vergleich zur zweiten Ausführungsform jedoch nur geringfügig in der Konturgebung des ersten Deckelements (14a, 14b) abweicht, so daß im Folgenden nur auf die zweite Ausführungsform Bezug genommen wird. Die Aussagen gelten aber gleichermaßen auch für die dritte Ausführungsform.

Die zweite Ausführungsform ist in wesentlichen Teilen in gleicher oder in ähnlicher Weise wie die erste Ausführungsform der Erfindung ausgeführt. Somit wird im Rahmen der Beschreibung vorliegend auch auf die obigen Ausführungen zur ersten Ausführungsform der Erfindung gemäß den Beschreibungen zu den Figuren 1 bis 5 Bezug genommen.
Abweichungen der zweiten Ausführungsform zur ersten Ausführungsform der Erfindung sind einerseits in der Gestaltung des ersten und zweiten Deckelements gegeben. Die Deckelemente sind hier jeweils doppellagig ausgeführt. Entsprechend besteht das erste Deckelement 12 aus einer oberen Lage 12a und einer unteren Lage 12b. Das zweite Deckelement 14 besteht aus einer oberen Lage 14a und einer unteren Lage 14b. In Figur 6 sind hierfür aber nur die Bezugszeichen 12 und 14 wiedergegeben. In dem in Figur 7A dargestellten Grundzuschnitt ist ferner am Ende des ersten Deckelements eine Lasche 20b dargestellt, die hier jedoch nicht die Funktion des Verschlusses 20 aus Figur 1 erfüllt, sondern als Abstandshalter bei Anordnung im Hüllelement dient, um so eine sichere Funktionsweise des unten näher beschriebenen Verhakungselements 28 zu gewährleisten.
Ferner ist ein Unterschied zu der ersten Ausführungsform insbesondere in der Gestaltung des Hüllelements 26 gegeben. Das Hüllelement 26 der zweiten Ausführungsform der Erfindung gemäß der Darstellung in Figur 6 umfaßt eine Oberseite 26a und eine Unterseite 26b. Ferner ist das Hüllelement 26 an drei Seiten 26c, 26d, 26e des Hüllelements durch Seitenelemente verschlossen. Das Verpackungselement 10 kann somit nur von einer Seite in das Hüllelement 26 eingeschoben werden.
Das Verpackungselement gemäß der zweiten Ausführungsform weist keinen Verschluß wie in der ersten Ausführungsform der Erfindung beschrieben auf. Stattdessen ist an dem Verpackungselement 10 und dem Hüllelement 26 ein Verhakungselement vorgesehen, das das Verpackungselement 10 und das Hüllelement 26 gegen ein versehentliches Trennen insbesondere beim Herausziehen des Verpackungselements aus dem Hüllelement sichert. Das Verhakungselement 28 arbeitet nach dem Prinzip eines Widerhakens, wobei das Verpackungselement 10 hierzu auf der Unterseite des zweiten Deckelements eine aufgebogene Lasche 28a aufweist. Auf der Innenseite der Unterseite des Hüllelements 26 ist als Widerhaken eine weitere eingebogene Lasche 28b vorgesehen, in den die Lasche 28a des Verpackungselements beim Herausziehen des Verpackungselements aus dem Hüllelement eingreift und so ein vollständiges Herausziehen oder auch versehentliches Herausgleiten des Verpackungselements aus dem Hüllelement verhindert. Soll das Hüllelement und das Verpackungselement voneinander getrennt werden, so ist zumindest eine Lasche 28a, 28b so zurückzudrücken, daß ein Einhaken der beiden Laschen verhindert wird.
Ferner weicht die zweite Ausführungsform der Erfindung hinsichtlich der Anordnung der Nase von der oben beschriebenen ersten Ausführungsform dahingehend ab, daß die in Figur 6 dargestellte und mit dem ersten Deckelement verbundene Nase 24 nahe dem Verbindungselement der beiden Deckelemente angeordnet ist. Die Nase 24 dient dazu, einen Angreifpunkt für einen Nutzer bereitzustellen, um so leicht und komfortabel bedienbar das in das Hüllelement eingesteckte Verpackungselement aus dem Hüllelement ziehen zu können. Hierzu ist die Oberseite des Hüllelements zusätzlich auch in einem Halbrund 27 ausgeschnitten.

Sowohl die Herstellung der zweiten Ausführungsform der Erfindung durch Zuschneiden des Grundzuschnittes aus Figur 7A, B und Falten entlangt der Faltlinien als auch der Zusammenbau der zweiten Ausführungsform der Erfindung gestalten sich somit ebenso sehr einfach und kostengünstig.

Die Bedienweise der zweiten Ausführungsform der Erfindung unterscheidet sich jedoch geringfügig von der Bedienweise der ersten Ausführungsform. Ist das Verpackungselement 10 gemäß der in Figur 6 dargestellten Ausführungsform aus dem Hüllelement 26 herausgezogen, so wird die Vorrichtung von einem Bediener zweckmäßig an dem Hüllelement 26 gehalten, während das erste Deckelement 14 aufgeklappt wird. Hierbei kann das erste Deckelement 14 somit einem Halbkreis entsprechend um 180° aufgeklappt werden. Im Ergebnis gestaltet sich der Aufklappvorgang somit ähnlich dem Aufklappvorgang der ersten Ausführungsform der Erfindung, wobei hier jedoch zweckmäßig beide Deckelemente 12, 14 aus der in die Senkrechte aufgeklappten Position um jeweils einen Winkel von 90° aufgeklappt werden. Der Bewegungsablauf des Halterungselements 30 erfährt durch diese unterschiedliche Bedienweise zwar keine Änderung, jedoch unterscheiden sich die beiden Ausführungsformen somit in der Bedienweise für einen Nutzer.

In einer weiteren, besonders zweckmäßigen Ausgestaltung der Erfindung können auch mehrere, beispielsweise zwei oder drei, flächige Gegenstände in der erfindungsgemäßen Verpackungs- und Präsentationsvorrichtung gehaltert und verpackt werden. Hierzu sind in der Halterungsvorrichtung mehrere Schrägschlitzungen parallel zueinander anzuordnen, wobei jede Schrägschlitzung den obigen Ausführungen entsprechend ausgeführt ist. Die Schrägschlitzungen sind jeweils zueinander beabstandet, wobei vorzugsweise ein geringer Abstand, beispielsweise zum Zwecke der Halterung von mehreren Compact-Disks, zu wählen ist. So ist es bereits ausreichend, den Abstand der doppelten Dicke einer Compact-Disk entsprechend zu wählen. Im Falle der Halterung mehrerer flächiger Gegenstände parallel zueinander lassen sich die Gegenstände beim Schließen der Verpackungs- und Präsentationsvorrichtung zwar nicht mehr vollständig bis zu einem Winkel von näherungsweise 0° in Längsrichtung des Verbindungselements eindrehen, jedoch ergibt sich auch hier durch die Verwendung der erfindungsgemäßen Vorrichtung eine erhebliche Platzersparnis im Vergleich zu herkömmlichen Verpackungs- und Präsentationsvorrichtungen.

## Patentansprüche

1. Verpackungs- und Präsentationsvorrichtung zur Verpackung und Halterung von einem oder mehreren flächigen Gegenständen, insbesondere von einer oder mehreren Compact-Disks (50) oder dergleichen, mit
einem verpackungselement (10)
und einem Halterungselement (30) zur Halterung des flächigen Gegenstandes,
wobei das Verpackungselement (10) zumindest ein erstes Deckelement (12) und ein zweites Deckelement (14) umfaßt, die im verpackten Zustand näherungsweise parallel zueinander angeordnet sind und den flächigen Gegenstand in dem verpackten Zustand im wesentlichen vollständig umschließen,
und die Deckelemente (12, 14) des weiteren längs eines Verbindungselements (16) gelenkig so miteinander verbunden sind, daß das Verpackungselement (10) durch ein Aufklappen eines oder beider Deckelemente aus dem verpackten Zustand in einen unverpackten Zustand überführbar ist als auch umgekehrt,
und wobei das Halterungselement (30) den flächigen Gegenstand im verpackten Zustand näherungsweise parallel zur Längsrichtung (M) des Verbindungselements (16) haltert,
**dadurch gekennzeichnet,**
**daß** das Halterungselement (30) den flächigen Gegenstand im unverpackten Zustand unter einem Winkel (54) zur Längsrichtung des Verbindungselements gedreht haltert.

2. Verpackungs- und Präsentationsvorrichtung gemäß Anspruch 1,
wobei der Winkel (54) des flächigen Gegenstandes zur Längsrichtung des Verbindungselements im unverpackten Zustand zwischen 25° und 50°, besonders bevorzugt 40°, beträgt.

3. Verpackungs- und Präsentationsvorrichtung gemäß einem der vorhergehenden Ansprüche,
wobei der Übergang der Ausrichtung des flächigen Gegenstandes während des Aufklappens des Verpackungselementes (10) aus dem verpackten Zustand in den unverpackten Zustand stufenlos erfolgt.

4. Verpackungs- und Präsentationsvorrichtung gemäß einem der vorhergehenden Ansprüche,
wobei das Halterungselement (30) den flächigen Gegenstand zentral haltert.

5. Verpackungs- und Präsentationsvorrichtung gemäß einem der vorhergehenden Ansprüche,
wobei die Deckelemente (12, 14) des Verpackungselements bis zu einem Winkel von 180° gegeneinander aufklappbar sind.

6. Verpackungs- und Präsentationsvorrichtung gemäß einem der vorhergehenden Ansprüche,
wobei das Halterungselement (30) ein sich in einem Kopfbereich verjüngendes Element (32) mit einem in dem Kopfbereich des verjüngenden Elements angeordneten Aufnahmeelement zur Aufnahme des flächigen Gegenstandes ist.

7. Verpackungs- und Präsentationsvorrichtung gemäß Anspruch 6,
wobei das sich in dem Kopfbereich verjüngende Element ein Dreieckselement ist.

8. Verpackungs- und Präsentationsvorrichtung gemäß einem der Ansprüche 6 oder 7,
wobei der Kopfwinkel (40) des sich verjüngenden Elements oder Dreieckselements während des Aufklappens des Verpackungselements vergrößert wird und im aufgeklappten Zustand bevorzugt 20° bis 50°, und besonders bevorzugt 35° beträgt.

9. Verpackungs- und Präsentationsvorrichtung gemäß einem der Ansprüche 6 bis 8,
wobei das Aufnahmeelement eine Schrägschlitzung (44) ist, die auf beiden Seiten des sich verjüngenden Elements oder Dreieckselements in dem sich verjüngenden Element oder dem Dreieckselement (32) vorgesehen ist und die sich von dem Kopfbereich in Richtung des Bodenbereichs des sich verjüngenden Elements oder Dreieckelements erstreckt.

10. Verpackungs- und Präsentationsvorrichtung gemäß einem der Ansprüche 7 bis 9,
wobei das Dreieckselement (32) einen ersten Schenkel (34) und einen zweiten Schenkel (36) umfaßt, die jeweils eine Oberkante (35a, 37a) und eine Unterkante (35b, 37b) aufweisen, wobei die Schenkel an ihren Oberkanten gelenkig miteinander verbunden sind und hier den Kopfbereich des Dreieckselements bilden, und die Unterkante (35b) des ersten Schenkels (34) mit einer Innenseite des ersten Deckelementes (12) des Verpackungselementes und die Unterkante (37b) des zweiten Schenkels (36) mit einer Innenseite des zweiten Deckelementes (14) des Verpackungselementes verbunden ist.

11. Verpackungs- und Präsentationsvorrichtung gemäß einem der Ansprüche 7 bis 10,
wobei das Dreieckselement (32) so angeordnet ist, daß im verpackten Zustand des Verpackungselements eine Ebene, die von einer Mittellinie (M) des Verbindungselements (16) und der Spitze des Dreieckselements (32) aufgespannt wird, parallel zu den Deckelementen (12, 14) und zwischen diesen verläuft.

12. Verpackungs- und Präsentationsvorrichtung gemäß einem der Ansprüche 7 bis 11,
wobei die Schenkel (34, 36) des Dreieckselements gleich lang sind und vorzugsweise jeder Schenkel an der Unterkante zumindest eine flügelartige, gelenkig ausgeführte Klappe (42a, 42b) aufweist, die an der Innenseite des betreffenden Deckelements anliegt.

13. Verpackungs- und Präsentationsvorrichtung gemäß einem der Ansprüche 6 bis 12,
wobei der flächige Gegenstand eine Compact-Disk (50) ist, und die Schrägschlitzung (44) vorzugsweise eine solche Tiefe aufweist, daß die Compact-Disk (50) bis zu einer handelsüblichen mittigen Aussparung der Compact Disk in die Schrägschlitzung eingesteckt werden kann.

14. Verpackungs- und Präsentationsvorrichtung gemäß Anspruch 13,
wobei im Kopfbereich des Dreieckselements zusätzlich ein Sicherungselement zur Sicherung einer in dem Schrägschlitz angeordneten Compact Disk angeordnet ist.

15. Verpackungs- und Präsentationsvorrichtung gemäß Anspruch 14,
wobei das Sicherungselement eine Sicherungsnase (48) ist, die zur Sicherung der Compact Disk durch die mittige Aussparung der Compact Disk hindurchgreift.

16. Verpackungs- und Präsentationsvorrichtung gemäß einem der vorhergehenden Ansprüche,
wobei das Verpackungselement (10) und/oder das Halterungselement (30) jeweils aus einem einteiligen Grundzuschnitt (60) bestehen und vorzugsweise durch Falten längs Faltlinien in eine betriebsbereite Position gebracht werden.

17. Verpackungs- und Präsentationsvorrichtung gemäß einem der vorhergehenden Ansprüche,
wobei das Verpackungselement (10) und das Halterungselement (30) aus einem gemeinsamen Grundzuschnitt bestehen und vorzugsweise durch Falten längs Faltlinien in eine betriebsbereite Position gebracht werden.

18. Verpackungs- und Präsentationsvorrichtung gemäß einem der vorhergehenden Ansprüche,
wobei das Verpackungselement (10) und/oder das Halterungselement (30) aus einem papiernen Werkstoff, vorzugsweise aus einer faltbaren Pappe oder alternativ aus einem vorzugsweise bedruckbarem Kunststoff, hergestellt sind.

19. Verpackungs- und Präsentationsvorrichtung gemäß einem der vorhergehenden Ansprüche,
wobei die Deckelemente (12, 14) jeweils gleiche, rechteckige Grundrisse aufweisen und die Deckelemente vorzugsweise jeweils längs einer Seitenkante miteinander verbunden sind.

20. Verpackungs- und Präsentationsvorrichtung gemäß einem der vorhergehenden Ansprüche,
wobei das Verpackungselement zusätzlich einen Verschluß (20) umfaßt, vorzugsweise eine einklappbare Lasche.

21. Verpackungs- und Präsentationsvorrichtung gemäß einem der vorhergehenden Ansprüche,
wobei die Verpackungsvorrichtung zusätzlich ein Einschubelement zur Aufnahme des flächigen Gegenstandes umfaßt, das vorzugsweise an einer Seite eines Deckelements angeordnet ist.

22. Verpackungs- und Präsentationsvorrichtung gemäß Anspruch 21,
wobei das Einschubelement ein Schuber (22) ist, der vorzugsweise aus einem papiernen Werkstoff oder einem vorzugsweise bedruckbarem Kunststoff hergestellt ist.

23. Verpackungs- und Präsentationsvorrichtung gemäß einem der vorhergehenden Ansprüche,
wobei die Verpackungsvorrichtung zusätzlich ein Hüllelement (26) umfaßt, in das das Verpackungselement in verpacktem Zustand eingeschoben werden kann.

24. Verpackungs- und Präsentationsvorrichtung gemäß Anspruch 23,
wobei das Hüllelement aus einem papiernen Werkstoff hergestellt ist.

25. Verpackungs- und Präsentationsvorrichtung gemäß Anspruch 23,
**dadurch gekennzeichnet, daß** das Hüllelement aus einem vorzugsweise bedruckbaren Kunststoff hergestellt ist.

26. Verpackungs- und Präsentationsvorrichtung gemäß einem der Ansprüche 23 bis 25,
wobei das Verpackungselement (10) und das Hüllelement (26) mittels eines Verhakungselements (28) gegen ein versehentliches Trennen gesichert sind.

27. Verpackungs- und Präsentationsvorrichtung gemäß einem der vorhergehenden Ansprüche,
**dadurch gekennzeichnet, daß** die Bauteile derselben aus einem bogenförmigen Zuschnitt eines papiernen Werkstoffs oder Kunststoff-Werkstoffs gefaltet sind, wobei die Bauteile vorzugsweise durch Verklebungen miteinander verbunden sind.

28. Zuschnitt für eine Präsentationsvorrichtung gemäß einem der vorhergehenden Ansprüche.

## Claims

1. A packing and presentation device for the packing and support of one or more flat objects, particularly of one or more compact discs (50) or the like, with a packing element (10) and a supporting element (30) for supporting the flat object,
wherein the packing element (10) comprises at least a first cover element (12) and a second cover element (14), which, in the packed condition, are arranged approximately parallel with each other and essentially fully enclose the flat object in the packed condition, wherein the cover elements (12, 14) are furthermore articulated to each other along a connecting element (16) so that the packing element (10) can be transferred by folding up one or both cover elements from the packed condition to an unpacked condition, and vice versa, and wherein the supporting element (30) supports the flat object in the packed condition approximately parallel with the longitudinal direction (M) of the connecting element (16),
**characterised in that** the supporting element (30) supports the flat object in the unpacked condition rotated at an angle (54) to the longitudinal direction of the connecting element.

2. The packing and presentation device according to claim 1, wherein the angle (54) of the flat object to the longitudinal direction of the connecting element in the unpacked condition is between 25° and 50°, particularly preferred 40°.

3. The packing and presentation device according to one of the preceding claims, wherein the transition of the alignment of the flat object during folding up of the packing element (10) from the packed to the unpacked condition takes place continuously.

4. The packing and presentation device according to one of the preceding claims, wherein the supporting element (30) supports the flat object centrally.

5. The packing and presentation device according to one of the preceding claims, wherein the cover elements (12, 14) of the packing element can be folded up against each other up to an angle of 180°.

6. The packing and presentation device according to one of the preceding claims, wherein the supporting element (30) is an element (32) that tapers in a head region, with a receiving element arranged in the head region of the tapering element for receiving the flat object.

7. The packing and presentation device according to claim 6, wherein the element tapering in the head region is a triangular element.

8. The packing and presentation device according to one of claims 6 or 7, wherein the head angle (40) of the tapering element or triangular element is increased during the folding up of the packing element and is preferably 20° to 50°, and particularly preferred 35°, in the folded-up condition.

9. The packing and presentation device according to one of claims 6 to 8, wherein the receiving element is a skewed slot (44) which is provided on both sides of the tapering element or triangular element in the tapering element or triangular element (32), and which extends from the head region in the direction of the base region of the tapering element or triangular element.

10. The packing and presentation device according to one of claims 7 to 9, wherein the triangular element (32) comprises a first leg (34) and a second leg (36), each leg having an upper edge (35a, 37a) and a lower edge (35b, 37b, wherein the legs are articulated to each other on their upper edges and here form the head region of the triangular element, and wherein the lower edge (35b) of the first leg (34) is connected to one inner side of the first cover element (12) of the packing element and the lower edge (37b) of the second leg (36) is connected to one inner side of the second cover element (14) of the packing element.

11. The packing and presentation device according to one of claims 7 to 10, wherein the triangular element (32) is arranged so that in the packed condition of the packing element a plane, which is clamped from a centreline (M) of the connecting element (16) and the tip of the triangular element (32), runs parallel with the cover elements (12, 14) and between them.

12. The packing and presentation device according to one of claims 7 to 11, wherein the legs (34, 36) of the triangular element are of equal length, and each leg preferably has on the lower edge at least one wing-shaped, articulated flap (42a, 42b) which abuts the inside of the cover element concerned.

13. The packing and presentation device according to one of claims 6 to 12, wherein the flat object is a compact disc (50) and the skewed slot (44) is preferably of such a depth that the compact disc (50) can be inserted into the skewed slot as far as a commercially standard central recess provided in the compact disc.

14. The packing and presentation device according to claim 13, wherein a safety element is additionally arranged in the head region of the triangular element for protecting a compact disc arranged in the skewed slot.

15. The packing and presentation device according to claim 14, wherein the safety element is a safety lug (48) which extends through the central recess of the compact disc to protect the compact disc.

16. The packing and presentation device according to one of the preceding claims, wherein the packing element (10) and/or the supporting element (30) each consist of a base blank in one piece (60) and are brought into an operational position preferably by folding along folding lines.

17. The packing and presentation device according to one of the preceding claims, wherein the packing element (10) and the supporting element (30) consist of a common base blank and are brought into an operational position preferably by folding along folding lines.

18. The packing and presentation device according to one of the preceding claims, wherein the packing element (10) and/or the supporting element (30) are manufactured from a paper material, preferably from a foldable cardboard or alternatively from a preferably printable plastic.

19. The packing and presentation device according to one of the preceding claims, wherein the cover elements (12, 14) each have identical, rectangular contours and the cover elements are preferably connected to each other along a lateral edge.

20. The packing and presentation device according to one of the preceding claims, wherein the packing element additionally comprises a lock (20), preferably a strap that can be folded inwards.

21. Packing and presentation device according to one of the preceding claims, wherein the packing device additionally comprises an insert element for receiving the flat object, which is preferably arranged on a side of a cover element.

22. Packing and presentation device according to claim 21, wherein the insert element is a pusher (22) which is preferably made from a paper material or from a preferably printable plastic.

23. Packing and presentation device according to one of the preceding claims, wherein the packing device additionally comprises an envelope element (26) into which the packing element can be pushed in the packed condition.

24. Packing and presentation device according to claim 23, wherein the envelope element is made from a paper material.

25. Packing and presentation device according to claim 23, **characterised in that** the envelope element is made from a preferably printable plastic.

26. Packing and presentation device according to one of claims 23 to 25, wherein the packing element (10) and the envelope element (26) are protected from accidental separation by means of a hooking element (28).

27. Packing and presentation device according to one of the preceding claims, **characterised in that** the components of the same are folded from a sheet-shaped blank of a paper material or plastic material, wherein the components are preferably connected to each other by glued joints.

28. Blank for a presentation device according to one of the preceding claims.

## Revendications

1. Dispositif d'emballage et de présentation pour emballer et supporter un ou plusieurs objets plats, en particulier un ou plusieurs disques compacts (50) ou similaires, comportant
un élément d'emballage (10),
et un élément de support (30) pour supporter l'objet plat,
dans lequel l'élément d'emballage (10) comprend au moins un premier élément de recouvrement (12) et un deuxième élément de recouvrement (14) qui sont agencés approximativement parallèlement l'un à l'autre à l'état emballé et qui enferment sensiblement complètement l'objet plat à l'état emballé,
et les éléments de recouvrement (12, 14) sont en outre reliés l'un à l'autre de manière articulée le long d'un élément de liaison (16), de telle sorte que l'élément d'emballage (10) peut être amené par déploiement de l'un ou des deux éléments de recouvrement depuis l'état emballé jusqu'à un état non emballé et inversement,
et l'élément de support (30) supporte l'objet plat à l'état emballé approximativement parallèlement à la direction longitudinale (M) de l'élément de liaison (16),
**caractérisé en ce que**
l'élément de support (30) supporte l'objet plat à l'état non emballé tourné sous un angle (54) par rapport à la direction longitudinale de l'élément de liaison.

2. Dispositif d'emballage et de présentation selon la revendication 1,
dans lequel l'angle (54) de l'objet plat par rapport à la direction longitudinale de l'élément de liaison à l'état non emballé est de 25° à 50°, de manière particulièrement préférée de 40°.

3. Dispositif d'emballage et de présentation selon l'une des revendications précédentes,
dans lequel le passage de l'alignement de l'objet plat pendant le déploiement de l'élément d'emballage (10) depuis l'état emballé jusque dans l'état non emballé a lieu de façon continue.

4. Dispositif d'emballage et de présentation selon l'une des revendications précédentes,
dans lequel l'élément de support (30) supporte l'objet plat au centre.

5. Dispositif d'emballage et de présentation selon l'une des revendications précédentes,
dans lequel les éléments de recouvrement (12, 14) de l'élément d'emballage peuvent être déployés jusque sous un angle de 180° l'un par rapport à l'autre.

6. Dispositif d'emballage et de présentation selon l'une des revendications précédentes,
dans lequel l'élément de support (30) est un élément (32) qui se rétrécit dans une région de tête avec un élément de réception agencé dans la région de tête de l'élément qui se rétrécit pour recevoir l'objet plat.

7. Dispositif d'emballage et de présentation selon la revendication 6
dans lequel l'élément qui se rétrécit dans la région de tête est un élément triangulaire.

8. Dispositif d'emballage et de présentation selon la revendication 6 ou 7,
dans lequel l'angle de tête (40) de l'élément qui se rétrécit ou de l'élément triangulaire est agrandi pendant le déploiement de l'élément d'emballage et il est, à l'état déployé, de préférence de 20° à 50°, et en particulier de préférence de 35°.

9. Dispositif d'emballage et de présentation selon l'une des revendications 6 à 8,
dans lequel l'élément de réception est une fente en biais (44) qui est prévue dans l'élément qui se rétrécit ou dans l'élément triangulaire des deux côtés de l'élément qui se rétrécit ou de l'élément triangulaire (32) et qui s'étend depuis la région de tête en direction de la région de fond de l'élément qui se rétrécit ou de l'élément triangulaire.

10. Dispositif d'emballage et de présentation selon l'une des revendications 7 à 9,
dans lequel l'élément triangulaire (32) comprend une première branche (34) et une deuxième branche (36) qui présentent chacune une arête supérieure (35a, 37a) et une arête inférieure (35b, 37b), les branches étant reliées l'une à l'autre de manière articulée au niveau de leurs arêtes supérieures et formant ici la région de tête de l'élément triangulaire, et l'arête inférieure (35b) de la première branche (34) étant reliée à une face intérieure du premier élément de recouvrement (12) de l'élément d'emballage et l'arête inférieure (37b) de la deuxième branche (36) étant reliée à une face intérieure du deuxième élément de recouvrement (14) de l'élément d'emballage.

11. Dispositif d'emballage et de présentation selon l'une des revendications 7 à 10,
dans lequel l'élément triangulaire (32) est agencé de telle sorte qu'à l'état emballé de l'élément d'emballage, un plan qui est défini par une ligne médiane (M) de l'élément de liaison (16) et par la pointe de l'élément triangulaire (32) s'étend parallèlement aux éléments de recouvrement (12, 14) et entre ceux-ci.

12. Dispositif d'emballage et de présentation selon l'une des revendications 7 à 11,
dans lequel les branches (34, 36) de l'élément triangulaire sont de même longueur et, de préférence, chaque branche présente sur l'arête inférieure au moins un volet (42a, 42b) en forme de vantail réalisé de façon articulé qui est en appui sur la face intérieure de l'élément de recouvrement concerné.

13. Dispositif d'emballage et de présentation selon l'une des revendications 6 à 12,
dans lequel l'objet plat est un disque compact (50), et la fente en biais (44) présente de préférence une profondeur telle que le disque compact (50) peut être enfiché dans la fente en biais jusqu'à un évidement médian usuel du disque compact.

14. Dispositif d'emballage et de présentation selon la revendication 13,
dans lequel dans la région de tête de l'élément triangulaire est agencé additionnellement un élément de sécurité pour arrêter un disque compact agencé dans la fente en biais.

15. Dispositif d'emballage et de présentation selon l'une des revendications 14,
dans lequel l'élément de sécurité est un ergot de sécurité (48) qui s'engage à travers l'évidement médian du disque compact pour arrêter le disque compact.

16. Dispositif d'emballage et de présentation selon l'une des revendications précédentes,
dans lequel l'élément d'emballage (10) et/ou l'élément de support (30) sont chacun constitués par un flan de base (60) d'un seul tenant et amenés de préférence par pliage le long de lignes de pliage jusque dans une position prête à fonctionner.

17. Dispositif d'emballage et de présentation selon l'une des revendications précédentes,
dans lequel l'élément d'emballage (10) et l'élément de support (30) sont chacun constitués par un flan de base commun et amenés de préférence par pliage le long de lignes de pliage jusque dans une position prête à fonctionner.

18. Dispositif d'emballage et de présentation selon l'une des revendications précédentes,
dans lequel l'élément d'emballage (10) et l'élément de support (30) sont fabriqués en un matériau en papier, de préférence en un carton pliable ou, en alternative, en une matière plastique de préférence imprimable.

19. Dispositif d'emballage et de présentation selon l'une des revendications précédentes,
dans lequel les éléments de recouvrement (12, 14) présentent chacun le même tracé rectangulaire et les éléments de recouvrement sont de préférence reliés l'un à l'autre chacun le long d'une arête latérale.

20. Dispositif d'emballage et de présentation selon l'une des revendications précédentes,
dans lequel l'élément d'emballage comprend additionnellement une fermeture (20), de préférence une patte rabattable.

21. Dispositif d'emballage et de présentation selon l'une des revendications précédentes,
dans lequel le dispositif d'emballage comprend additionnellement un élément d'emboîtage pour recevoir l'objet plat, qui est agencé de préférence sur un côté de l'élément de recouvrement.

22. Dispositif d'emballage et de présentation selon la revendication 21,
dans lequel l'élément d'emboîtage est un emboîtage (22) qui est réalisé de préférence en un matériau en papier ou en une matière plastique de préférence imprimable.

23. Dispositif d'emballage et de présentation selon l'une des revendications précédentes,
dans lequel le dispositif d'emballage comprend additionnellement un élément enveloppant (26) dans lequel l'élément d'emballage peut être enfilé à l'état emballé.

24. Dispositif d'emballage et de présentation selon la revendication 23,
dans lequel l'élément enveloppant est réalisé en un matériau en papier.

25. Dispositif d'emballage et de présentation selon la revendication 23, **caractérisé en ce que** l'élément enveloppant est réalisé en une matière plastique de préférence imprimable.

26. Dispositif d'emballage et de présentation selon l'une des revendications 23 à 25,
dans lequel l'élément d'emballage (10) et l'élément enveloppant (26) sont assurés à l'encontre d'une séparation par inadvertance au moyen d'un élément d'accrochage (28).

27. Dispositif d'emballage et de présentation selon l'une des revendications précédentes,
**caractérisé en ce que** les composants du dispositif sont pliés à partir d'un flan issu d'une feuille d'un matériau en papier ou d'un matériau en matière plastique, les composants étant reliés les uns aux autres par des collages.

28. Flan pour un dispositif de présentation selon l'une des revendications précédentes.
